# EUROPEAN PATENT APPLICATION

(11) **EP 4 610 911 A1**
(43) Date of publication of application: **03.09.2025**
(21) Application number: 24191013.2
(22) Date of filing: 25.07.2024
(51) Int. Cl.: G06Q 20/32, G06Q 20/36, G06Q 20/22

(54) **THIRD-PARTY APPLICATION-BASED CREDENTIAL MANAGEMENT**

(30) Priority: 01.03.2024 US 202463560604 P; 18.06.2024 US 202418746786
(71) Applicant: Apple Inc., Cupertino, CA 95014 (US)
(72) Inventor: SUBRAMANIAN, Kartik, Cupertino, 95014 (US); SCOTT, Gordon Y., Cupertino, 95014 (US); ELRAD, Oren M., Cupertino, 95014 (US)
(74) Representative: Bateman, Samuel Alec

(57) **Abstract**

Aspects of the subject technology include receiving, by an operating system process of an electronic device, a request to access a default digital wallet of the electronic device, determining, by the operating system process, whether a third-party digital wallet has been configured as the default digital wallet for the electronic device, and responsive to receiving the request to access the default digital wallet and to determining that the third-party digital wallet has been configured as the default digital wallet for the electronic device foregrounding the third-party digital wallet on a user interface of the electronic device and configuring, by the operating system process, an NFC controller of the electronic device to receive a credential from the third-party digital wallet for conducting a transaction.

## Description

### CROSS-REFERENCE TO RELATED APPLICATIONS

The present application claims the benefit of U.S. Provisional Patent Application Serial No. 63/560,604, entitled "THIRD-PARTY APPLICATION-BASED CREDENTIAL MANAGEMENT," filed March 1, 2024, which is hereby incorporated herein by reference in its entirety and made part of the present U.S. Utility Patent Application for all purposes.

### TECHNICAL FIELD

The present description generally relates to transactions on electronic devices and, more particularly, to third-party application-based credential management.

### BACKGROUND

Mobile payment and electronic wallets offer convenience and security by eliminating the need to carry physical payment cards, thereby reducing the risk of fraud and theft. They are becoming increasingly popular as more merchants accept mobile payments and more users seek to simplify their payment processes.

### BRIEF DESCRIPTION OF THE DRAWINGS

Certain features of the subject technology are set forth in the appended claims. However, for the purpose of explanation, several implementations of the subject technology are set forth in the following figures.
FIG. 1 illustrates an example network environment for mobile transactions, in accordance with one or more implementations.
FIG. 2 depicts an example user device that may implement the subject methods and systems, in accordance with one or more implementations.
FIG. 3 depicts the example user device obtaining a credential from a remote server, in accordance with one or more implementations.
FIG. 4 depicts the example user device presenting the credential of FIG. 3 to a remote terminal, in accordance with one or more implementations.
FIG. 5 depicts the example user device presenting a credential from a remote server to a remote terminal, in accordance with one or more implementations.
FIG. 6 depicts a flow diagram of an example process for facilitating a wireless transaction with a third-party application, in accordance with one or more implementations.
FIG. 7 depicts a flow diagram of an example process for facilitating a wireless transaction, in accordance with one or more implementations.
FIG. 8 depicts an example electronic system with which aspects of the present disclosure may be implemented in accordance with one or more implementations.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In one or more implementations, structures and components are shown in block diagram form in order to avoid obscuring the concepts of the subject technology.

Electronic wallet applications (or "digital wallets") for user devices (e.g., smartphones and tablets) are applications (or "apps") that can store payment credentials on user devices and enable users to make transactions electronically. Digital wallet apps can store multiple types of digital credentials, such as credit and debit cards, bank accounts, and gift cards, offering a convenient and quick way to conduct transactions without the need for physical cards or cash. Digital wallets not only facilitate online purchases but also support contactless payments in physical stores through technologies like NFC (Near Field Communication), enhancing the shopping experience with speed and security. However, the convenience of digital wallets may come with its own set of challenges, such as when multiple digital wallet apps (e.g., first- and third-party digital wallet apps) are installed on a single mobile device.

Aspects of the subject technology introduce approaches for managing credentials associated with third-party applications, such as third-party digital wallets. One or more third-party applications may be installed on a user device. One or more of the third-party applications on the user device may be associated with one or more credentials stored in association with the respective third-party application. One or more of the third-party applications on the user device may be designated as a default digital wallet application, which may be launched manually (e.g., via user input) or automatically (e.g., in response to predefined triggers). Launching the default wallet application may cause the operating system of the user device to bring the default digital wallet application to the foreground and configure the one or more components of the user device to receive a digital credential from the default digital wallet application for presenting the digital credential.

The operating system may also handle conflicts between multiple foregrounded applications, such as by disambiguating which digital wallet application should be used for a transaction. For example, if there is already a foreground digital wallet application, the default digital wallet application may not be brought to the foreground so as not to disrupt the user experience. The subject technology provides more flexibility as to how applications may utilize the user device to manage credentials, such as payment credentials. The subject technology also provides for more efficient transmission of credentials when multiple digital wallets are installed on the user device.

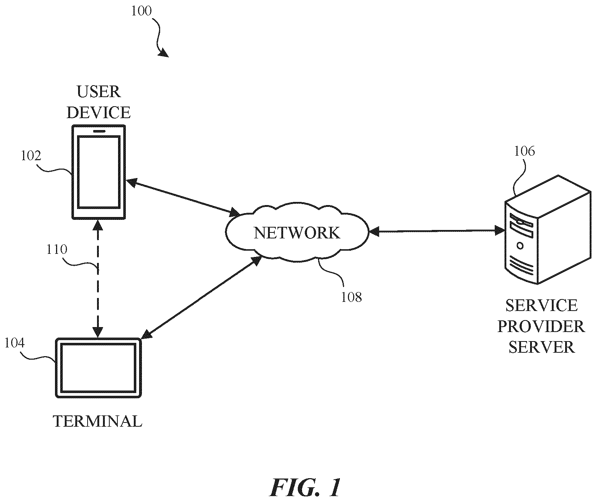

FIG. 1 illustrates an example network environment 100 for mobile transactions, in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

The network environment 100 may include a user device 102, a terminal 104, and one or more servers (e.g., service provider server 106). The network 108 may communicatively (directly or indirectly) couple the user device 102, terminal 104, and/or the service provider server 106. In one or more implementations, the network 108 may be an interconnected network of devices that may include, or may be communicatively coupled to, the Internet. For explanatory purposes, the network environment 100 is illustrated in FIG. 1 as including the user device 102, terminal 104, and the service provider server 106; however, the network environment 100 may include any number of electronic devices and/or any number of servers communicatively coupled to each other directly or via the network 108.

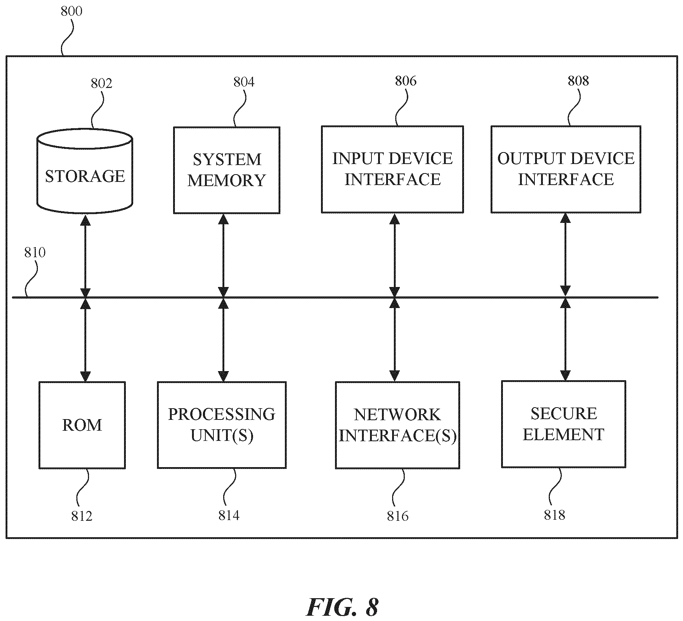

The user device 102 may be, for example, a wearable device such as a watch, a band, and the like, a desktop computer, a portable computing device such as a laptop computer, a smartphone, a peripheral device (e.g., a digital camera, headphones), a tablet device, or any other appropriate device that includes, for example, one or more wireless interfaces, such as WLAN radios, cellular radios, Bluetooth radios, Zigbee radios, near field communication (NFC) radios, and/or other wireless radios. In FIG. 1, by way of example, the user device 102 is depicted as a smartphone. The user device 102 may be, and/or may include all or part of, the electronic system discussed below with respect to FIG. 8.

The user device 102 may have a layered architecture that includes an operating system (OS) and one or more applications designed to run on top of it. The OS may include a variety of system level processes that, for discussion purposes herein, may be referred to generally as the OS. The OS may manage the hardware resources of the user device 102 and may provide common services for application software. The OS may act as an intermediary between applications and the physical device components, such as the CPU, memory, and storage systems, enabling the creation, execution, and management of applications with which the user may interact. The OS may control hardware operations, manage software resources, and provide user interface elements, allowing the user to interact with the user device 102. Among the applications on the user device 102, some may be or include digital wallets, which are specialized software programs designed to store and/or present user credentials (e.g., user information, payment information, and/or the like). Digital wallets can integrate with various payment systems and/or online services, allowing users to conduct present digital credentials efficiently without the need for physical credentials (e.g., gift cards, credit cards, hotel room keys, and/or the like).

The terminal 104 may be a similar electronic device as described with respect to the user device 102. In FIG. 1, by way of example, the terminal 104 is depicted as a tablet. The terminal 104 may be, and/or may include all or part of, the electronic system discussed below with respect to FIG. 8. The terminal 104 may be, for example, a point-of-sale (POS) system, ATM, or public transport fare gate, configured to facilitate various forms of interactions, such as transactions, via an NFC reader. The integration of an NFC reader in the terminal 104 allows the terminal 104 to receive digital credentials from an app (e.g., digital wallet) on the user device 102 during a transaction 110 (e.g., a financial transaction or other credential presentment). When a user device is placed near the NFC reader of a terminal, the NFC technology facilitates a secure wireless transmission of the digital credential, enabling, for example, the execution of the transaction or granting access without the need for physical cards or cash. In some implementations, the wireless transmission may include encryption to keep information exchanged between the user device 102 and the terminal 104 from being intercepted and understood by unauthorized parties. Additionally, tokenization may be used to replace sensitive data, such as credit card numbers, with a unique identifier (a "token") that has no value if compromised.

The service provider server 106 may generate, keep, and/or provide digital credentials for or to electronic devices (e.g., the user device 102). Digital credentials may include one or more identifiers in the form of a code, a number, a data structure, a signal (e.g., an NFC signal), and/or the like. In some variations, the service provider server 106 includes one or more app-specific modules (e.g., plugins) (and/or separate servers) that perform operations for a respective application (e.g., tokenizing and/or provisioning payment credentials). In one or more implementations, a digital credential may be generated by the service provider server 106 and/or provided to or accessed by the user device 102. The service provider server 106 may store account information (e.g., user account, usernames/handles, or any other account-specific data) associated with the user device 102 and/or users thereof and/or users associated therewith. In one or more implementations, one or more servers (e.g., the service provider server 106) may provide digital credentials that are to be provisioned and/or stored on or at a device (e.g., the user device 102) by an application, operating system, and/or secure element of the device. In one or more implementations, the user device 102 may be communicatively coupled to the terminal 104 to provide information associated with a digital credential (e.g., decryption key) to the terminal 104.

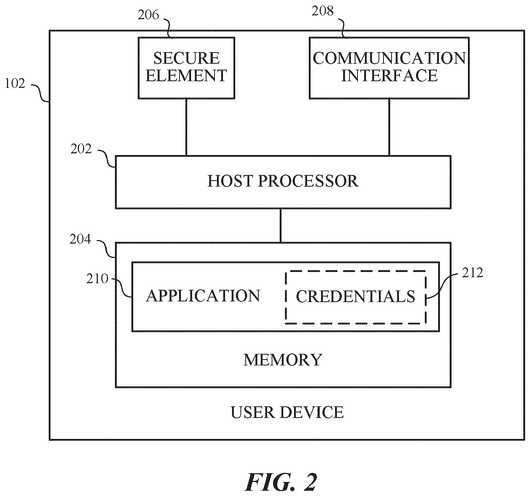

FIG. 2 depicts a user device 102 that may implement the subject methods and systems, in accordance with one or more implementations. For explanatory purposes, FIG. 2 is primarily described herein with reference to the user device 102 of FIG. 1. However, this is merely illustrative, and features of the electronic device of FIG. 2 may be implemented in any other electronic device for implementing the subject technology. Not all of the depicted components may be used in all implementations, however, and one or more implementations may include additional or different components than those shown in FIG. 2. Variations in the arrangement and type of the components may be made without departing from the spirit or scope of the claims as set forth herein. Additional components, different components, or fewer components may be provided.

The user device 102 may include one or more of a host processor 202, a memory 204, a secure element 206, and/or a communication interface 208. The host processor 202 may include suitable logic, circuitry, and/or code that enable processing data and/or controlling operations of the user device 102. In this regard, the host processor 202 may be enabled to provide control signals to various other components of the user device 102. The host processor 202 may also control transfers of data between various portions of the user device 102. The host processor 202 may further implement an operating system or may otherwise execute code to manage operations of the user device 102.

The memory 204 may include suitable logic, circuitry, and/or code that enable storage of various types of information such as received data, generated data, code, and/or configuration information. The memory 204 may include volatile memory (e.g., random access memory (RAM)) and/or non-volatile memory (e.g., read-only memory (ROM), flash, and/or magnetic storage). In one or more implementations, the memory 204 may store one or more applications (e.g., application 210) and data associated therewith (e.g., credentials 212), and any other data generated in the course of performing the processes described herein.

The secure element 206 may include hardware that provides secure storage and management of sensitive information. The secure element 206 may be securely isolated from the host processor 202 and/or operating system, making it more difficult for unauthorized access. The secure element 206 may be used for secure transactions and identification, such as in payment credentials, and the like. The secure element 206 may store sensitive information, such as cryptographic keys, and may protect the sensitive information with cryptographic algorithms and access controls. For example, the secure element 206 may include a hardware specific private key that is provisioned on the secure element 206 at or near the time of manufacture. The use of the secure element 206 provides an additional layer of security for sensitive information and helps to ensure its confidentiality in case the user device 102 is lost or compromised.

The communication interface 208 may include suitable logic, circuitry, and/or code that enables wired or wireless communication, such as between the user device 102 and the service provider server 106. The communication interface 208 may include, for example, one or more of a Bluetooth communication interface, an NFC interface, a Zigbee communication interface, a WLAN communication interface, a USB communication interface, a cellular interface, or generally any communication interface.

The secure element 206 and/or the communication interface 208 may be associated with one or more drivers (e.g., in memory 204) that allow the host processor 202 to communicate with the secure element 206 and/or the communication interface 208. Depending on the nature of the application 210, the host processor 202 can establish a route for data to travel between the secure element 206, the communication interface 208, the memory 204, and/or the application 210 via one or more drivers and/or the OS. For example, if the application 210 is a first party wallet application, the application 210 may be permitted to access, receive, or otherwise obtain credentials from the secure element 206 and provide the credentials to the communication interface 208, and/or instruct the secure element 206 to provide the credentials to the communication interface 208, via one or more drivers associated with the secure element 206 and/or the communication interface 208; if the application 210 is a third-party wallet application, the application 210 may not be permitted to obtain credentials from the secure element 206 but may provide credentials stored in memory 204 in association with the application 210 to the communication interface 208 via one or more drivers associated with the communication interface 208.

In one or more implementations, one or more of the host processor 202, the memory 204, the secure element 206, the communication interface 208, and/or one or more portions thereof may be implemented in software (e.g., subroutines and code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both.

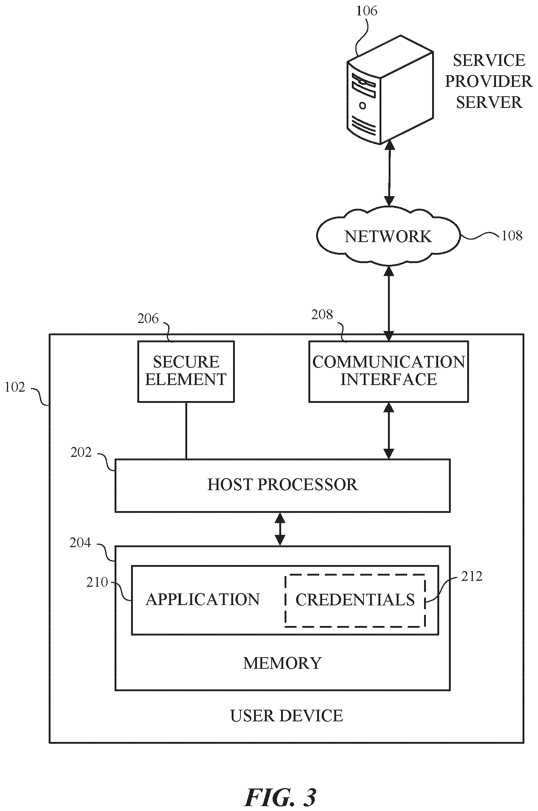

FIG. 3 depicts the user device 102 obtaining a credential 212 from a remote server (e.g., the service provider server 106), in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

In the user device 102, third-party applications (e.g., application 210) can expand the functionality and customization options available to users beyond what is offered by applications provided by the device manufacturer or operating system provider (also referred to as first-party apps). Users may have the flexibility to install multiple third-party apps that cater to a wide range of needs and preferences, including digital wallets that can manage credentials for payment systems, transportation platforms (e.g., digital car keys), hotel platforms (e.g., digital room keys), and/or the like. Third-party apps may be developed by entities independent of the device manufacturer or operating system provider and can be sourced from, e.g., various app stores.

An operating system may allow users to designate a particular third-party app as the default for conducting specific activities. For instance, a user might choose a third-party digital wallet app to manage their credit card transactions or select a default payment app for online purchases. Selecting default apps enables users to tailor their device's behavior to align with their habits and preferences, thereby enhancing the user experience.

While third-party apps offer benefits in terms of user choice and developer flexibility, third-party apps may lack the same level of vertical integration seen in first-party apps. Vertical integration may refer to the seamless integration of various services and functionalities within the ecosystem of the device's manufacturer, offering a more unified user experience and often higher performance and reliability due to the direct control over both the hardware and software aspects of the user device 102. Third-party apps, by contrast, are developed and maintained often without coordination with the developer of the device or operating system, which can limit their access to certain hardware features or data on the user device 102, potentially affecting their performance and capabilities, but can expand their compatibility with third-party services, devices (e.g., servers), and/or the like.

Third-party apps may interact with remote servers (e.g., service provider server 106). Remote servers, which may be hosted and managed by the app developer or a service provider, may provide additional functionality and expand the feature set of third-party apps. For instance, consider a banking app developed by a financial institution. The banking app may communicate with the bank's remote servers to perform a variety of functions, such as displaying account balances, transaction histories, or facilitating online transactions. One of the features that such a server can provide involves the generation of tokenized credit card numbers (e.g., credentials 212). When a user wishes to make a payment using their digital wallet, the banking server can generate a unique token that represents the user's credit card number. The unique token may then be securely transmitted to the user device 102 and used by the digital wallet app to complete the transaction. Remote servers are not limited to financial transactions and can support a wide range of functionalities depending on the nature of the third-party app. For example, a hotel app may retrieve room keys from its associated server and a store app might retrieve gift card balances through its server.

The digital credentials and other data received, accessed, or otherwise obtained from the remote server (e.g., service provider server 106) may be stored on the user device 102 in association (e.g., in memory 204) with the respective app (e.g., application 210). The local storage of such data may allow for quicker access, offline availability, and a smoother, more responsive app experience.

In some implementations, the operating system of the user device 102 may provide a security framework to help data stored by one app be securely isolated and limit access by other apps installed on the same device. Isolation may be achieved through various means, such as app sandboxing, which is a security mechanism that may restrict the app's operations within a confined environment, limiting its access to the system and other apps' data. Each app may operate in its own sandbox so that its data and runtime resources are kept private and secure from other apps. For example, when a banking app receives a tokenized credit card number from a remote server and stores it on the user device 102, this information is stored in association with the app in the app's sandboxed environment.

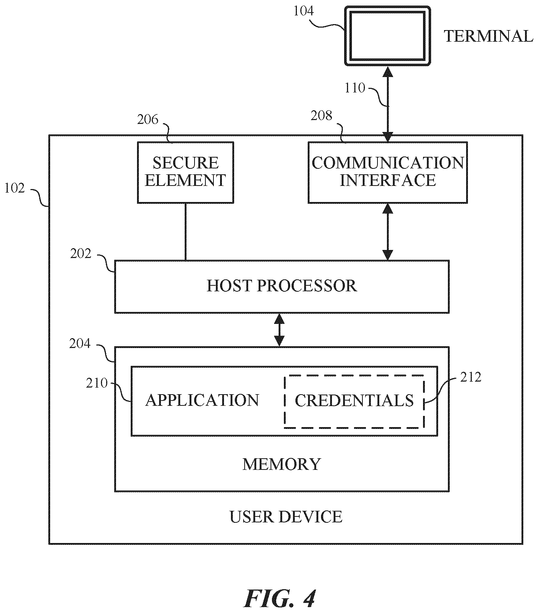

FIG. 4 depicts the user device 102 presenting the credential 210 to a terminal 104, in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

Apps on the user device 102 may be managed by the OS of the user device 102. When an app (e.g., application 210) is displayed on a user interface of the user device 102, and/or is the primary app (or focused app) displayed on the user interface, it may be considered to be in the foreground. A foreground status may grant the app higher priority in terms of access to system resources and user input. Conversely, apps that are not displayed on the user interface but are still running processes, such as checking for updates or notifications, may be placed in the background. Background apps may consume less processing power and have limited access to system resources compared to their foreground counterparts, as the OS may optimize performance and battery life by managing hardware resources of the user device 102 judiciously.

Foreground apps may be given precedence by the operating system over hardware components, such as communication interfaces 208 (e.g., NFC controllers), cameras, and sensors. This prioritization can help maintain a responsive and efficient user experience. For instance, if a user is interacting with a foregrounded digital wallet app to make a payment, the OS may provide the app immediate and prioritized access to the NFC controller, and blocking other apps from access to the NFC controller, to facilitate a transaction.

An app can be brought to the foreground in a variety of ways. One way is through direct user interaction, where the user manually selects and opens the app, e.g., by tapping its icon on the home screen of the user interface of the user device 102 or double pressing a physical button on the user device 102. The user action may signal to the operating system to launch the app, making it the active or foreground app. Additionally or alternatively, applications may be configured to be default applications that are set to automatically open in response to specific triggers or events. For instance, if the user device 102 detects an NFC terminal proximate to the user device 102, the operating system can automatically bring the default digital wallet app to the foreground, assuming the app has been set as the default for handling NFC transactions.

In some implementations, when an app is launched into the foreground while another app is already in the foreground, the operating system may manage a transition between the currently foregrounded app and the app to be foregrounded. The currently foregrounded app may be moved to the background, if it does not have exclusive access to the NFC controller (e.g., when the currently foregrounded app does not have a payment intent assertion). For example, the OS may save the state of the app moving to the background so that any data not saved or actions not completed are preserved for when the user returns to the app.

Generally, the NFC terminal may not tell the user device 102 what to open, but rather the user device 102 may automatically open the default application. However, in some implementations, if the NFC terminal indicates that it supports enhanced contactless polling (ECP), the user device 102 may automatically open a first-party digital wallet app, or an ECP-supported credential therein, regardless of what digital wallet app is configured to be the default. In this manner, ECP polling provides an early indication to the user device 102 as to the capabilities of the terminal device.

In one or more implementations, if the polling information received from a given wireless terminal includes a field that has ECP information, and if the user has a credential in their digital wallet that matches that ECP field, then the matching credential is automatically used instead of launching the default digital wallet application.

The OS of the user device 102 may manage one or more OS processes that allow an application to interface with hardware components, such as the communication interface 208 (e.g., an NFC controller), for the secure and efficient transfer of credentials. When a transaction involves digital credentials stored in association with an app, such as a payment or identity credential, the app may communicate with the OS to access the appropriate hardware.

The app (e.g., application 210) may access, retrieve, or otherwise obtain a digital credential (e.g., credential 212), such as a tokenized credit card number or a digital ID, from its secure storage within the user device 102 (e.g., in memory 204). The app may then communicate with an NFC driver, a software component that acts as an intermediary between the app and the NFC hardware of the user device 102. The NFC driver is associated with and/or part of the operating system and may provide a standardized interface and/or OS process through which apps can access NFC functionality without directly managing the hardware of the user device 102. The NFC driver may configure the NFC controller for use, the hardware component responsible for generating the electromagnetic field and managing communication with an NFC reader or another NFC-enabled device.

The configuration may be managed by an OS process, which helps verify that the NFC controller is available and not currently being used by another process (e.g., identifies payment intent assertions), establishes what settings (e.g., system calls, API calls, file paths, transmission protocols, and/or the like) are to be utilized by the NFC controller, and/or any other settings relating to the NFC controller. The configuration may be different depending on whether the app is a first-party or third-party app. For example, when the digital wallet is a first-party app, an operating system process, such as the NFC driver, may configure the NFC controller to receive a credential from the secure element 206 (or other similar secure hardware) and route the credential to the NFC reader; when the digital wallet is a third-party app, an operating system process, such as the NFC driver, may configure the NFC controller to receive a credential provided by the third-party digital wallet (e.g., from a storage volume associated therewith, which is not the secure element 206) and route the credential to the NFC reader.

In one or more implementations, the user interface that is presented to the user may differ depending on which digital wallet application is selected as the default digital wallet application. For example, if a first party digital wallet application is selected as a default, when the wallet launches for an NFC transaction, the wallet may display a user interface that says "Hold Near Reader" along with an image or an animated image. However, when a third-party digital wallet application is selected as the default, a different user interface may be presented to the user. For, example, the user interface may display different text and/or a different animated image, and/or may include a color scheme and/or logo associated with the third-party.

Once the NFC controller is configured, the digital credential may be transmitted from the app to the NFC controller, facilitated by the NFC driver of the OS. The credential may then be emitted via the NFC controller to the receiving device, such as terminal 104 (e.g., a point-of-sale terminal, access gate, and/or the like).

During credential presentment, third-party applications (e.g., application 210) may provide users with visual, audio, and/or tactile feedback to indicate that the presentment (e.g., transaction) is in progress. For example, a payment app might display a message on the screen, play a sound, and/or vibrate the user device 102 to notify the user that their payment information is being transmitted. In some implementations, the feedback indicating that presentment is in progress may be different for third-party apps than for first-party apps.

During credential presentment, the third-party application may also request the operating system to manage access to system resources, such as the NFC controller (e.g., communication interface 208). The operating system may temporarily grant exclusive access to the NFC controller to the requesting app (e.g., app with a payment intent assertion), suspending other apps' access to the NFC functionality. For example, the app may signal to the OS to temporarily prevent access to the NFC controller by other applications so that the current transaction is not interrupted. Third-party apps may also implement their own security measures during presentment. This could include additional encryption of the data being transmitted, authentication checks before initiating the transaction, or logging of transaction details for security auditing purposes.

In one or more implementations, the electronic device may support the use of a digital wallet application that does not require authentications, such as an "express" mode. In the express mode, a pre-configured default credential may be selected and presented for a particular transaction without user authentication, such as for a transit system. The subject system may allow each digital wallet application to configure its own default credential for express transactions. In one or more implementations, a default credential for express transactions may be configured at the operating system level.

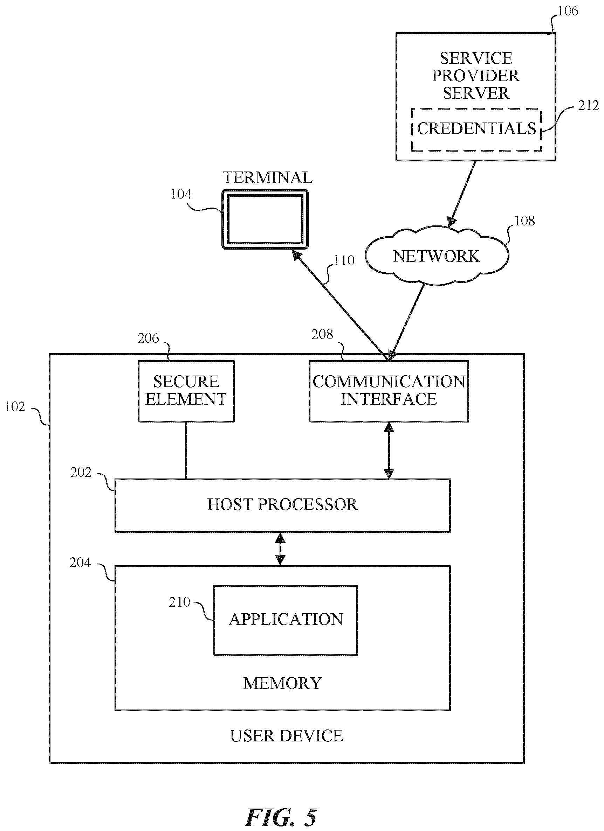

FIG. 5 depicts the example user device 102 presenting a credential 210 from a remote server (e.g., service provider server 106) to a remote terminal (e.g., terminal 106), in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

Some approaches to managing digital credentials may include storing the digital credentials in the secure element 206. The OS can accommodate such approaches by configuring the NFC controller (e.g., communication interface 208) to receive a digital credential from the secure element to, for example, conduct a transaction.

While some approaches rely on a secure element within the device to store and manage these credentials, the OS may also or instead configure the NFC controller to receive credentials from a remote server (e.g., service provider server 106) via the third-party application (application 210), bypassing the secure element.

The third-party application may be associated with a remote server, which may provide backend functionality to an application. The remote server, associated with the third-party application, can generate, store, maintain, and/or otherwise include digital credentials. For instance, in some implementations, the digital credential may be dynamically generated, such as room keys or temporary access tokens for secure transactions. In some implementations, the remote server may include the digital credential for secure storage, for example, when the application cannot access the secure element 206 of the user device 102. In some implementations, the remote server may include the digital credential for accessibility across multiple devices that each have the application.

When a transaction is initiated, and credentials are required, the third-party app may receive, access, or otherwise obtain the credential from the remote server, for example, over an encrypted channel. The credential could be a digital token, a one-time password (OTP), payment information, or other forms of digital keys designed for the transaction at hand. Upon receiving the credential, the third-party application may use the credential to complete the transaction, which could involve communicating with another device (such as an NFC terminal), another remote server (e.g., a financial institution's server), or any other entity involved in processing the transaction.

In some implementations, the credential may be temporarily stored in a secure area managed by the OS and/or in association with the application 210 (e.g., in the same sandbox or storage volume), which may be accessible to the NFC controller and the app, at least for the duration of the transaction.

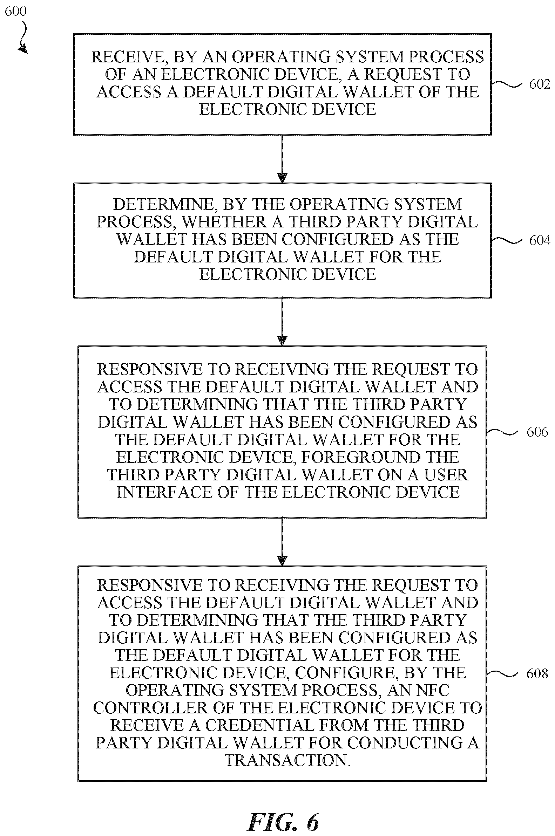

The OS, upon instruction, signal, or other indication from the app, may configure the NFC controller to utilize the credential in the impending transaction, as discussed with respect to FIGS. 4 & 6. With the NFC controller configured, the user device 102 may be brought into proximity with the NFC terminal to complete the transaction. The NFC controller may communicate the credential to the terminal, facilitating the transaction in a secure and contactless manner.

FIG. 6 depicts a flow diagram of a process 600 for facilitating a wireless transaction with a third-party application, in accordance with one or more implementations. For explanatory purposes, the process 600 is primarily described herein with reference to the user device 102, the terminal 104, and the service provider server 106 of FIG. 1. However, the process 600 is not limited to the user device 102, the terminal 104, or the service provider server 106, and one or more blocks of the process 600 may be performed by one or more other components of the service provider server 106, and/or by other suitable devices. Further, for explanatory purposes, the blocks of the process 600 are described herein as occurring sequentially or linearly. However, multiple blocks of the process 600 may occur in parallel. In addition, the blocks of the process 600 need not be performed in the order shown and/or one or more blocks of the process 600 need not be performed and/or can be replaced by other operations.

At block 602, an operating system process of an electronic device (e.g., the user device 102) may receive a request to access a default digital wallet of the electronic device. The electronic device may have one or more applications installed thereon. The applications installed on the electronic device may include at least one digital wallet, at least one of which may be designated, selected, saved, or otherwise configured (e.g., by a user) as a default digital wallet. Thus, when there are multiple digital wallet applications installed on the electronic device, the operating system of the electronic device may disambiguate which digital wallet application should be used for a given transaction, such as by using the process 600 and/or the process 700.

In some implementations, the request to access the default digital wallet may correspond to user input. For example, the user input may include a button press, touch screen press, voice command, or any other command from the user to the electronic device.

In some implementations, the request to access the default digital wallet may also or instead correspond to the detection of a terminal (e.g., terminal 104). The terminal may be proximate to the electronic device (e.g., within 5cm).

At block 604, the operating system process may determine whether a third-party digital wallet (e.g., application 210) has been configured as the default digital wallet for the electronic device. For example, the operating system process may access a comprehensive database in system settings that stores user preferences and configurations to identify the default digital wallet application.

At block 606, when the request to access the default digital wallet has been received and the operating system process has determined that the third-party digital wallet has been configured as the default digital wallet for the electronic device, the operating system process may foreground the third-party digital wallet on a user interface of the electronic device. The user interface of the electronic device may include the user-facing aspects of the operating system on which an application may be rendered and presented to the user. Foregrounding the third-party digital wallet on the user interface may include presenting the third-party digital wallet to the user on the electronic device.

In some implementations, if another application is already in the foreground and the other application is not a digital wallet, the third-party digital wallet may replace the other application. For example, the other application may be moved from the foreground to the background and the third-party digital wallet may be moved from the background to the foreground or launched to the foreground if not running in the background.

In some implementations, if another application is already in the foreground and the other application is a digital wallet, the operating system process may forego foregrounding the third-party digital wallet. The operating system process may also or instead determine whether the other application is blocking, reserving, or otherwise preventing the third-party digital wallet from launching, such as when the other application is conducting a wireless transaction (e.g., has a payment intent assertion).

At block 608, when the request to access the default digital wallet has been received and the operating system process has determined that the third-party digital wallet has been configured as the default digital wallet for the electronic device, the operating system process may configure an NFC controller (e.g., communication interface 208) of the electronic device to receive a credential from the third-party digital wallet for conducting a transaction.

Example configurations of the NFC controller include a first-party digital wallet configuration in which one or more operating system processes, such as those associated with an NFC driver, direct a secure element (e.g., secure element 206) of the electronic device to provide a credential and direct the NFC controller to receive the credential for transmitting (e.g., to an NFC reader) and routing the credential to the NFC reader.

Example configurations of the NFC controller also include a third-party digital wallet configuration in which one or more operating system processes (at least some of which may be different than the first-party digital wallet configuration), such as those associated with the NFC driver, direct the processor (e.g., the host processor 202) to access, receive, or otherwise obtain the credential stored in association with the application (e.g., in the same sandbox, storage volume, or any other storage related to the application) and direct the NFC controller to receive the credential for transmitting (e.g., to an NFC reader) to route the credential directly to the NFC reader.

In some implementations, the credential from the third-party digital wallet may be stored locally (e.g., in memory 204) on the electronic device in association with the application (e.g., in the same sandbox, storage volume, or any other storage related to the application).

In some implementations, the credential from the third-party digital wallet may be stored at a remote server and accessed from the remote server (e.g., by or via the third-party digital wallet).

In some implementations, when the operating system process has determined that the first-party digital wallet has been configured as the default digital wallet for the electronic device, the operating system process may foreground the first-party digital wallet on the user interface of the electronic device. The operating system process may also configure the NFC controller with the first-party digital wallet configuration.

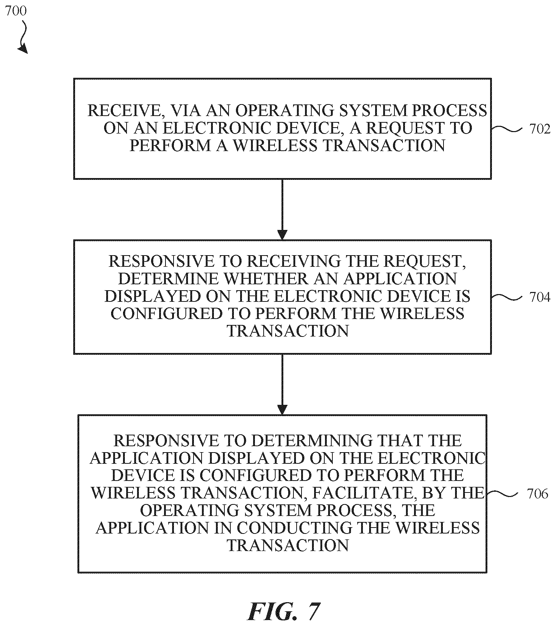

FIG. 7 depicts a flow diagram of a process 700 for facilitating a wireless transaction, in accordance with one or more implementations. For explanatory purposes, the process 700 is primarily described herein with reference to the user device 102, the terminal 104, and the service provider server 106 of FIG. 1. However, the process 700 is not limited to the user device 102, the terminal 104, or the service provider server 106, and one or more blocks of the process 700 may be performed by one or more other components of the service provider server 106, and/or by other suitable devices. Further, for explanatory purposes, the blocks of the process 700 are described herein as occurring sequentially or linearly. However, multiple blocks of the process 700 may occur in parallel. In addition, the blocks of the process 700 need not be performed in the order shown and/or one or more blocks of the process 700 need not be performed and/or can be replaced by other operations.

At block 702, an operating system process of an electronic device (e.g., the user device 102) may receive a request to perform a wireless transaction with the electronic device. The electronic device may have one or more applications installed thereon. The applications installed on the electronic device may include at least one digital wallet, at least one of which may be designated, selected, saved, or otherwise configured (e.g., by a user) as a default digital wallet.

In some implementations, the request may correspond to user input. For example, the user input may include a button press, touch screen press, voice command, or any other command from the user to the electronic device.

In some implementations, the request may also or instead correspond to the detection of a terminal (e.g., terminal 104). The terminal may be proximate to the electronic device (e.g., within 5cm).

At block 704, when the request is received, the operating system process may determine whether an application (e.g., application 210) displayed on the electronic device is configured to perform the wireless transaction. The electronic device may have one or more applications installed thereon. The applications installed on the electronic device may include at least one digital wallet, at least one of which may be designated, selected, saved, or otherwise configured (e.g., by a user) as a default digital wallet. The application may be a foreground application because it is displayed on the electronic device.

Determining whether the application is configured to perform the wireless transaction may include checking whether the application is a default application for performing wireless transactions. If the application is not the default application and/or the application is not configured to perform the wireless transaction, then the operating system process may launch the default digital wallet for performing the wireless transaction.

Determining whether the application is configured to perform the wireless transaction may also or instead include analyzing the application's manifest or configuration file, or any other file in which the application declares its permissions and capabilities to the operating system. For example, when an application is developed to perform NFC transactions, it may request access to the NFC controller by including specific permissions in its manifest, which may be reviewed by the operating system and/or approved by the user at the time of the application's installation.

Determining whether the application is configured to perform the wireless transaction may also or instead include identifying any credentials stored in association with the application. Credentials that may be transmitted via NFC may indicate that the application is configured to perform the wireless transaction.

At block 706, if the application is configured to perform the wireless transaction, the operating system process may facilitate the application in conducting the wireless transaction. Facilitating the application in conducting the wireless transaction may include the operating system providing one or more processes, services, system calls, APIs, permissions, directories, and/or any other system resource to the application for the application to provide and/or the NFC controller to receive the credential for conducting the wireless transaction (e.g., by transmitting the credential to terminal 104). For example, the operating system process may configure the NFC controller of the electronic device to receive the credential from the application for the wireless transaction, where the configuration may be a third-party digital wallet configuration described above.

In some implementations, facilitating the application in conducting the wireless transaction may include the operating system service preventing the default wallet from launching while the wireless transaction is being conducted by the application (e.g., when the application makes a payment intent assertion) so as not to interrupt the transaction. To prevent abuse of this facilitation, the operating system process may facilitate the application in conducting the wireless transaction for a predetermined time period, such as thirty seconds. The assertion may be provided to the NFC driver at an appropriate point during the transaction to ensure that the transaction is not interrupted.

FIG. 8 depicts an example electronic system 800 with which aspects of the present disclosure may be implemented, in accordance with one or more implementations. The electronic system 800 can be, and/or can be a part of, any electronic device for generating the features and processes described in reference to FIGS. 1-7, including but not limited to a laptop computer, tablet computer, smartphone, and wearable device (e.g., smartwatch, fitness band). The electronic system 800 may include various types of computer-readable media and interfaces for various other types of computer-readable media. The electronic system 800 includes a persistent storage device 802, a system memory 804 (and/or buffer), an input device interface 806, an output device interface 808, a bus 810, a ROM 812, one or more processing unit(s) 814, one or more network interface(s) 816, a secure element 818, and/or subsets and variations thereof.

The bus 810 collectively represents all system, peripheral, and chipset buses that communicatively connect the numerous internal devices of the electronic system 800. In one or more implementations, the bus 810 communicatively connects the one or more processing unit(s) 814 with the ROM 812, the system memory 804, and the persistent storage device 802. From these various memory units, the one or more processing unit(s) 814 retrieves instructions to execute and data to process in order to execute the processes of the subject disclosure. The one or more processing unit(s) 814 can be a single processor or a multi-core processor in different implementations.

The ROM 812 stores static data and instructions that are needed by the one or more processing unit(s) 814 and other modules of the electronic system 800. The persistent storage device 802, on the other hand, may be a read-and-write memory device. The persistent storage device 802 may be a non-volatile memory unit that stores instructions and data even when the electronic system 800 is off. In one or more implementations, a mass-storage device (such as a magnetic or optical disk and its corresponding disk drive) may be used as the persistent storage device 802.

In one or more implementations, a removable storage device (such as a floppy disk, flash drive, and its corresponding disk drive) may be used as the persistent storage device 802. Like the persistent storage device 802, the system memory 804 may be a read-and-write memory device. However, unlike the persistent storage device 802, the system memory 804 may be a volatile read-and-write memory, such as RAM. The system memory 804 may store any of the instructions and data that one or more processing unit(s) 814 may need at runtime. In one or more implementations, the processes of the subject disclosure are stored in the system memory 804, the persistent storage device 802, and/or the ROM 812. From these various memory units, the one or more processing unit(s) 814 retrieves instructions to execute and data to process in order to execute the processes of one or more implementations.

The bus 810 also connects to the input device interfaces 806 and output device interfaces 808. The input device interface 806 enables a user to communicate information and select commands to the electronic system 800. Input devices that may be used with the input device interface 806 may include, for example, alphanumeric keyboards, touch screens, and pointing devices. The output device interface 808 may enable the electronic system 800 to communicate information to users. For example, the output device interface 808 may provide the display of images generated by electronic system 800. Output devices that may be used with the output device interface 808 may include, for example, printers and display devices, such as a liquid crystal display (LCD), a light emitting diode (LED) display, an organic light emitting diode (OLED) display, a flexible display, a flat panel display, a solid-state display, a projector, or any other device for outputting information.

One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

The bus 810 also connects to secure element 818. The secure element 818 may include hardware and/or software that provides secure storage and management of sensitive information. The secure element 818 may be isolated from the processing unit 814 and operating system, making it more difficult for unauthorized access. The secure element 818 may be used for secure transactions and identification, such as in payment cards/credentials and digital passes. The secure element 818 may store sensitive information, such as cryptographic keys, and may protect the sensitive information (e.g., with cryptographic algorithms and access controls).

Finally, as shown in FIG. 8, the bus 810 also couples the electronic system 800 to one or more networks and/or to one or more network nodes through the one or more network interface(s) 816. In this manner, the electronic system 800 can be a part of a network of computers (such as a local area network, a wide area network, an Intranet, or a network of networks, such as the Internet). Any or all components of the electronic system 800 can be used in conjunction with the subject disclosure.

Implementations within the scope of the present disclosure can be partially or entirely realized using a tangible computer-readable storage medium (or multiple tangible computer-readable storage media of one or more types) encoding one or more computer-readable instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessors or multi-core processors that execute software, one or more implementations are performed by one or more integrated circuits, such as ASICs or FPGAs. In one or more implementations, such integrated circuits execute instructions that are stored on the circuit itself.

As described above, one aspect of the present technology is the gathering and use of data available from specific and legitimate sources for file sharing. The present disclosure contemplates that in some instances, this gathered data may include personal information data that uniquely identifies or can be used to identify a specific person. Such personal information data can include demographic data, location-based data, online identifiers, telephone numbers, email addresses, home addresses, images, videos, audio data, data or records relating to a user's health or level of fitness (e.g., vital signs measurements, medication information, exercise information), date of birth, or any other personal information.

The present disclosure recognizes that the use of such personal information data, in the present technology, can be used to the benefit of users. For example, personal information data can be used for file sharing. Accordingly, the use of such personal information data may facilitate transactions (e.g., online transactions). Further, other uses for personal information data that benefit the user are also contemplated by the present disclosure. For instance, health and fitness data may be used, in accordance with the user's preferences to provide insights into their general wellness or may be used as positive feedback to individuals using technology to pursue wellness goals.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are generally recognized as meeting or exceeding industry or governmental requirements for maintaining the privacy of users. Such information regarding the use of personal data should be prominently and easily accessible by users and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations which may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates implementations in which users selectively block the use of, or access to, personal information data. That is, the present disclosure contemplates that hardware and/or software elements can be provided to prevent or block access to such personal information data. For example, in the case of file sharing, the present technology can be configured to allow users to select to "opt-in" or "opt-out" of participation in the collection of personal information data during registration for services or anytime thereafter. In addition to providing "opt-in" and "opt-out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health-related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed implementations, the present disclosure also contemplates that the various implementations can also be implemented without the need for accessing such personal information data. That is, the various implementations of the present technology are not rendered inoperable due to the lack of all or a portion of such personal information data.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way), all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

As used in this specification and any claims of this application, the terms "base station," "receiver," "computer," "server," "processor," and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refers to only A, only B, or only C; any combination of A, B, and C; and/or at least one of each of A, B, and C.

The predicate words "configured to," "operable to," and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, one or more implementations, one or more implementations, an embodiment, the embodiment, another embodiment, one or more implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration." Any implementation described herein as "exemplary" or as an "example" is not necessarily to be construed as preferred or advantageous over other implementations. Furthermore, to the extent that the term "include," "have," or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f), unless the element is expressly recited using the phrase "means for" or, in the case of a method claim, the element is recited using the phrase "step for."

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein but are to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

## Claims

1. A method comprising:
receiving, by an operating system process of an electronic device, a request to access a default digital wallet of the electronic device;
determining, by the operating system process, whether a third-party digital wallet has been configured as the default digital wallet for the electronic device; and
responsive to receiving the request to access the default digital wallet and to determining that the third-party digital wallet has been configured as the default digital wallet for the electronic device:
foregrounding the third-party digital wallet on a user interface of the electronic device; and
configuring, by the operating system process, an NFC controller of the electronic device to receive a credential from the third-party digital wallet for conducting a transaction.

2. The method of claim 1, further comprising:
responsive to determining that a first-party digital wallet has been configured as the default digital wallet of the electronic device:
foregrounding the first-party digital wallet on the user interface of the electronic device; and
configuring, by the operating system process, the NFC controller of the electronic device to receive another credential from a secure element of the electronic device for conducting the transaction.

3. The method of claim 1, wherein the credential is stored locally on the electronic device in association with the third-party digital wallet.

4. The method of claim 1, wherein the credential is stored at a remote server and accessed from the remote server for conducting the transaction.

5. The method of claim 1, wherein the received request corresponds to user input.

6. The method of claim 1, wherein the received request corresponds to detection of an NFC terminal proximate to the electronic device.

7. The method of claim 1, wherein foregrounding the third-party digital wallet on the user interface of the electronic device comprises backgrounding an application foregrounded on the user interface of the electronic device.

8. A non-transitory machine readable medium comprising instructions that, when executed by one or more processors, cause the one or more processors to perform operations comprising:
receiving, via an operating system process on an electronic device, a request to perform a wireless transaction;
responsive to receiving the request, determining whether an application displayed on the electronic device is configured to perform the wireless transaction; and
responsive to determining that the application displayed on the electronic device is configured to perform the wireless transaction, facilitating, by the operating system process, the application in conducting the wireless transaction.

9. The non-transitory machine readable medium of claim 8, wherein the application is separate from a default digital wallet of the electronic device.

10. The non-transitory machine readable medium of claim 9, wherein the operations further comprise:
responsive to determining that the application displayed on the electronic device is not configured to perform the wireless transaction, launching, by the operating system process, the default digital wallet.

11. The non-transitory machine readable medium of claim 9, wherein facilitating, by the operating system process, the application in conducting the wireless transaction comprises:
preventing the default digital wallet from launching while the wireless transaction is being conducted by the application.

12. The non-transitory machine readable medium of claim 8, wherein facilitating, by the operating system process, the application in conducting the wireless transaction comprises:
configuring, by the operating system process, an NFC controller of the electronic device to receive a credential for the wireless transaction from the application.

13. The non-transitory machine readable medium of claim 8, wherein facilitating, by the operating system process, the application in conducting the wireless transaction is for a predetermined time period.

14. The non-transitory machine readable medium of claim 8, wherein the received request corresponds to user input.

15. The non-transitory machine readable medium of claim 8, wherein the received request corresponds to detection of an NFC terminal proximate to the electronic device.

16. A device comprising:
a memory; and
at least one processor configured to:
receive, by an operating system process of the device, a request to access a default digital wallet of the device;
determine, by the operating system process, whether a third-party digital wallet has been configured as the default digital wallet for the device; and
responsive to reception of the request to access the default digital wallet and to a determination that the third-party digital wallet has been configured as the default digital wallet for the device:
foreground the third-party digital wallet on a user interface of the device; and
configure, by the operating system process, an NFC controller of the device to receive a credential from the third-party digital wallet for conducting a transaction.

17. The device of claim 16, wherein the at least one processor is further configured to:
responsive to a determination that a first-party digital wallet has been configured as the default digital wallet of the device:
foreground the first-party digital wallet on the user interface of the device; and
configure, by the operating system process, the NFC controller of the device to receive another credential from a secure element of the device for conducting the transaction.

18. The device of claim 16, wherein the credential is stored locally on the device in association with the third-party digital wallet.

19. The device of claim 16, wherein the credential is stored at a remote server and accessed from the remote server for conducting the transaction.

20. The device of claim 16, wherein the received request corresponds to user input.
